# EUROPÄISCHE PATENTSCHRIFT

(11) **EP 1 037 774 B1**
(45) Veröffentlichungstag und Bekanntmachung des Hinweises auf die Patenterteilung: **06.10.2004**
(21) Anmeldenummer: 99963119.5
(22) Anmeldetag: 10.07.1999
(51) Int. Cl.: B60S 1/00

(54) **BEFESTIGUNG EINER ROHRPLATINE**
FASTENING OF A TUBE PLATE
FIXATION D'UNE PLATINE TUBULAIRE

(30) Priorität: 23.07.1998 DE 19833158
(43) Veröffentlichungstag der Anmeldung: 27.09.2000
(73) Patentinhaber: ROBERT BOSCH GMBH, 70442 Stuttgart (DE)
(72) Erfinder: FLEISCHER, Claus, D-77815 Bühl (DE)
(86) Internationale Anmeldenummer: PCT/DE1999/002137
(87) Internationale Veröffentlichungsnummer: WO 2000/005109

(56) Entgegenhaltungen:
- EP-A- 0 751 305
- EP-A- 0 798 183
- US-A- 5 222 706

## Beschreibung

### Stand der Technik

Die Erfindung geht aus von einer Befestigung einer Rohrplatine nach dem Oberbegriff des Anspruchs 1.

Wischeranlagen für Kraftfahrzeuge werden mit einem Wischerträger, einer sogenannten Platine bzw. Rohrplatine - wenn der Wischerträger auch aus Rohren besteht -, an der Karosserie eines Kraftfahrzeugs befestigt. Die Platine umfaßt in der Regel eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen Kurbeln an, die mit einer Antriebswelle für jeden Scheibenwischer fest verbunden sind. Die Antriebswellen der Scheibenwischer sind in Wischerlagern gelagert, deren Lagergehäuse an den Enden der Platine befestigt oder angeformt sind. Die Platine ist über die Lagergehäuse oder über Befestigungsaugen, die am Lagergehäuse, an der Platine und/oder der Motorplatine angeformt sind, an einer Fahrzeugkarosserie befestigt. Um zu vermeiden, daß Schwingungen von der Platine auf die Karosserie übertragen werden, sind zwischen der Platine und der Karosserie Entkopplungselemente angeordnet. In der Regel werden die Platinen aus vielen Bauteilen zusammengesetzt. Dies führt zu zahlreichen Schnittstellen mit entsprechenden Toleranzen. Hinzu kommen die Entkopplungselemente, die zum Teil lose beigefügt sind.

Aus der DE-GM 74 34 119 ist eine Rohrplatine bekannt, die aus einem Vierkantrohr hergestellt ist, an das eine als Motorplatine dienende Platte angeschweißt ist. An den Enden des Vierkantrohrs ist jeweils ein Wischerlager fixiert. Derartige Rohrplatinen oder Rohrrahmenanlagen sind trotz einer leichten Bauweise sehr stabil. Aus Kostengründen wird ein gerades Trägerrohr angestrebt, das keinen Vorbiegearbeitsgang erfordert.

Aus der DE 29 20 899 C2 ist eine Rohrplatine bekannt, wobei in das Hohlprofil des Platinenrohrs Rohrstutzen mit entsprechenden Ansätzen eingeschoben werden. Die Ansätze liegen wenigstens teilweise an den Wandungen des Platinenrohrs an und weisen wenigstens eine Aussparung auf, in die Abschnitte des Platinenrohrs eingedrückt sind, um eine formschlüssige Verbindung zwischen dem Platinenrohr und dem Rohrstutzen zu bilden. In den Rohrstutzen sind Wischerlager angeordnet. Gegenüber Schraubverbindungen ist die Anzahl der Teile reduziert, dennoch erfordert der Fügeprozeß noch zahlreiche vorgefertigte Einzelteile mit vielen Fertigungsschritten. Dies verteuert die Lagerhaltung und Logistik. Ferner haben die massiven Ansätze trotz der Aussparungen ein erhebliches Gewicht.

Es ist bereits in einer älteren Patentanmeldung, DE 196 42 666.9, vorgeschlagen, an einer Rohrplatine, die mit einem Innenhochdruckverfahren hergestellt ist, Rohrstutzen für Wischerlager anzuformen und in diese einteilige oder zweigeteilte Lagerbuchsen aus Kunststoff oder Metall einzusetzen. In Verlängerung des Platinenrohrs über die Wischerlager hinaus besitzt das Platinenrohr Befestigungsaugen, die durch einen Preßvorgang an das Platinenrohr angeformt sind. Die Rohrplatine wird unter Verwendung von Entkopplungselementen an der Fahrzeugkarosserie befestigt.

### Vorteile der Erfindung

Nach der Erfindung ist das Entkopplungselement der Innenkontur des Platinenrohrs im Bereich der Befestigungsbohrung angepaßt. Es ragt durch Öffnungen der Befestigungsbohrung mit einem Überstand heraus und überdeckt innen die Öffnung in axialer Richtung zu beiden Seiten. Die Befestigungsbohrung kann in einer Querebenen des Platinenrohr in einer beliebigen Winkellage angeordnet sein. Dadurch können auch Befestigungspunkte an der Fahrzeugkarosserie leicht erfaßt werden, die nicht in Richtung eines Wischerlagers liegen.

Pro Befestigungsstelle ist nur ein Entkopplungselement erforderlich, das ein großes Dämpfungsvolumen besitzt. Dieses liegt überwiegend im Platinenrohr und wird somit gegenüber Umwelteinflüssen vor Alterung und Beschädigung geschützt. Der aus dem Platinenrohr hervorstehende Teil kann auf ein Minimum beschränkt werden, so daß sich eine reduzierte äußere Bauhöhe ergibt. Durch den Überstand und die Überdeckung ist das Entkopplungselement in axialer und radialer Richtung durch Formschluß gesichert. Wird in axialer Richtung eine Überdeckung von ein bis zwei Millimeter gewählt, kann das Entkopplungselement bei einer zweckmäßigen Härte von ungefähr dreißig bis sechzig Shore A durch die Öffnungen der Befestigungsbohrung montiert werden, wobei die Montage auch automatisch erfolgen kann. Ist das Ende des Platinenrohrs offen, ist auch eine Montage in axialer Richtung des Platinenrohrs möglich, wenn der Überstand des Entkopplungselements und die Härte entsprechend abgestimmt sind. Allerdings sollte die Wandstärke des Entkopplungselements zwei Millimeter nicht unterschreiten. Durch das erfindungsgemäße Entkopplungselement wird ferner die Teilevielfalt reduziert und die Montage sowie Lagerhaltung erleichtert.

Da sich das Entkopplungselement gut an das Platinenrohr anschmiegt, werden Kräfte gut übertragen und Schwingungen durch eine intensive Reibung stark gedämpft. Ferner ist nicht zu befürchten, daß das Entkopplungselement durch den Druck der Befestigungsschrauben abgeschert wird. Um die Spannkräfte der Befestigungsschrauben auf das Entkopplungselement zu begrenzen, ist es zweckmäßig, in das Entkopplungselement eine Distanzbuchse mit einem Schraubenloch einzusetzen. Nach einem vorbestimmten Spannweg kommt die Distanzbuchse stirnseitig zur Anlage und überträgt die Schraubenkräfte, die die Vorspannung übersteigen. Zwischen dem Schraubenbolzen und dem Entkopplungselement sowie der Distanzbuchse ist eine Scheibe angeordnet, die das Entkopplungselement an der Stirnseite, die aus dem Platinenrohr herausragt, und die Öffnung der Befestigungsbohrung überdeckt. Somit ist die Rohrplatine selbst dann noch sicher gehalten, wenn das Entkopplungselement durch Verspröden, Altern oder Beschädigung seine Funktionsfähigkeit verliert. Die Scheibe kann auch einstückig in Form eines Bunds an der Distanzbuchse angeformt sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:

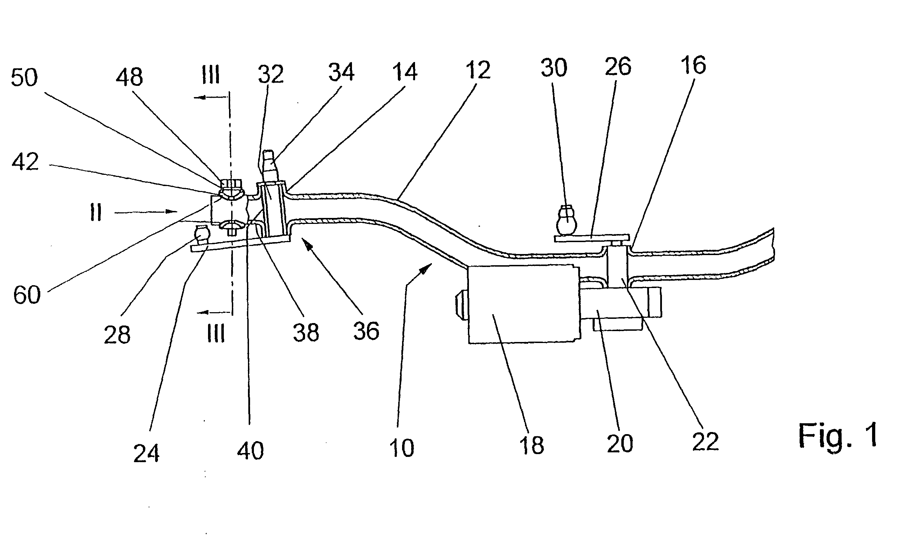

- Fig. 1: einen schematischen Teillängsschnitt durch eine Rohrplatine,
- Fig. 2: eine Ansicht entsprechend einem Pfeil II in Fig. 1 ohne Wischerlager,
- Fig. 3: einen Querschnitt entsprechend der Linie III-III in Fig. 1,
- Fig. 4: einen Teillängsschnitt entsprechend der Linie IV-IV in Fig. 2 und
- Fig. 5: einen Teillängsschnitt entsprechend der Linie V-V in Fig. 4.

### Beschreibung der Ausführungsbeispiele

Wesentlicher Bestandteil einer Rohrplatine 10 ist ein Platinenrohr 12, das in einem Innenhochdruckverfahren aus einem rohrförmigen Rohling umgeformt wurde. Das Platinenrohr 12 besteht aus allgemein geeigneten metallischen Werkstoffen, insbesondere aus Stahl mit oder ohne Oberflächenbeschichtung oder aus Edelstahl. Es besitzt angeformte Rohrstutzen 14 und 16. Im Rohrstutzen 16 ist ein Wischerantrieb bestehend aus einem Wischermotor 18 und einem Getriebe 20 mittels eines am Gehäuse des Getriebes 20 vorgesehenen Getriebedoms 22 gehalten. Im Getriebedom 22 ist eine Abtriebswelle mit einer Kurbel 26 gelagert, deren Kugelzapfen 30 über nicht dargestellte Gestänge mit Kugelzapfen 28 an Kurbeln 24 verbunden ist, die mit Antriebswellen 32 fest verbunden sind. Die Antriebswellen 32 tragen an ihren Enden 34 nicht näher dargestellte Scheibenwischer und sind in Wischerlagern 36 an den Enden des Platinenrohrs 12 gelagert. Das Wischerlager 36 enthält im wesentlichen eine Lagerbuchse 40 aus einem setzfreien Werkstoff, z.B. Stahl, Aluminium oder eine Leichtmetallegierung, die mit Übermaß in den Rohrstutzen 14 eingepreßt ist.

Das Platinenrohr 12 ist über das Wischerlager 36 verlängert. In seiner Verlängerung 38 befindet sich eine Befestigungsbohrung 58 mit Öffnungen 60. In der Befestigungsbohrung 58 sitzt ein Entkopplungselement 42, das mit einem Überstand 44 durch die Öffnungen 60 herausragt. Die Befestigungsbohrung 58 kann achsparallel zum Wischerlager 36 liegen, aber auch jeden beliebigen Winkel mit diesem einschließen.

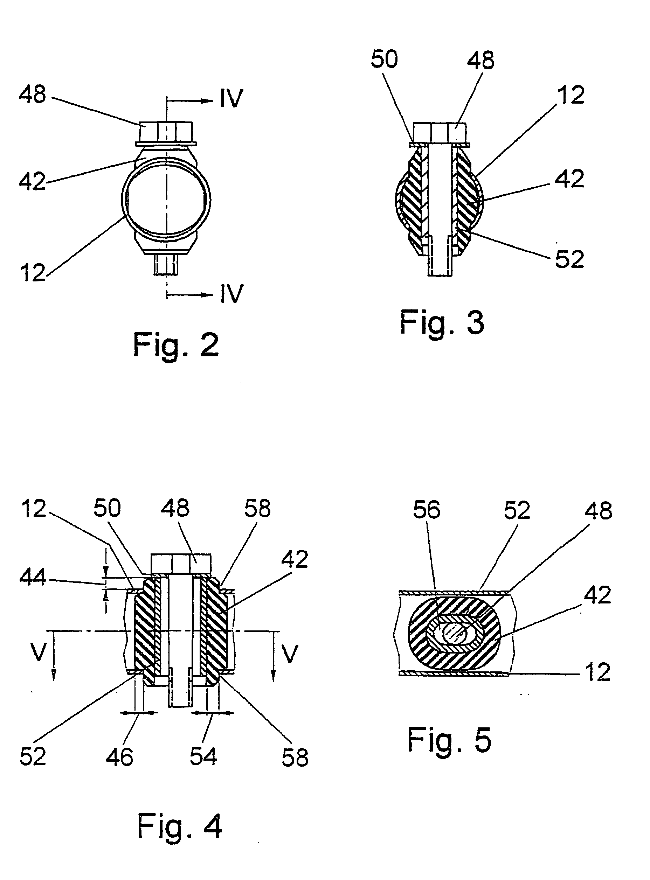

Wie Fig. 4 zeigt, ragt das Entkopplungselement 42 axial zu beiden Seiten mit einer Überdeckung 46 in das Platinenrohr 12. Die Überdeckung 46 und der Überstand 44 halten das Entkopplungselement 42 formschlüssig fixiert in dem Platinenrohr 12. Der Überstand 44 ist so gewählt, daß das Entkopplungselement 42 bei einer ausreichenden Dämpfung und Entkopplung eine geringe Baulänge ergibt. Dabei sollte die minimale Wandstärke 54 des Entkopplungselements 42 zwei Millimeter nicht unterschreiten. Der Überstand 44 und die Überdeckung 46, die zweckmäßigerweise ein bis zwei Millimeter beträgt, werden so auf die Härte des Entkopplungselements 42 abgestimmt, daß dieses entweder durch die Öffnungen 60 der Befestigungsbohrung 58 oder axial durch ein offenes Ende des Platinenrohrs 12 montiert werden kann. Die Härte des Entkopplungselements 42 liegt zweckmäßigerweise in dem Bereich zwischen dreißig und sechzig Shore A.

Durch das Entkopplungselement 42 ist eine Distanzbuchse 52 gesteckt, die ein Schraubenloch 56 mit einem ovalen Querschnitt für einen Schraubenbolzen 48 aufweist und so ein Langloch bildet um Längendifferenzen zwischen zwei Befestigungspunkten auszugleichen. Mit dem Schraubenbolzen 48 wird die Rohrplatine 10 an die Fahrzeugkarosserie festgeschraubt, wobei das Entkopplungselement 42 zusammengepreßt wird. Da das Entkopplungselement 42 einstückig und quer durch das Platinenrohr 12 geführt ist, besitzt es ein großes Volumen, das zur Aufnahme und Dämpfung von Schwingungen gut geeignet ist. Die Distanzbuchse 52 dient zur Begrenzung der Vorspannung, indem sie sich nach einem Verspannweg stirnseitig abstützt und somit die Schraubenkraft aufnimmt, die über die gewünschte Vorspannung hinausgeht.

Zwischen dem Schraubenbolzen 48 und dem Entkopplungselement 42 bzw. der Distanzbuchse 52 ist eine Scheibe 50 vorgesehen, die das Entkopplungselement 42 und die Öffnung 60 der Befestigungsbohrung 58 überdeckt, so daß die Rohrplatine 10 auch dann noch gesichert bleibt, wenn das Entkopplungselement 42 durch Altern oder Beschädigung nicht mehr funktionsfähig sein sollte. Da das Entkopplungselement 42 allerdings zum größten Teil im Platinenrohr 12 liegt, ist es gegen Umwelteinflüsse und Beschädigungen besonders gut geschützt. Die Scheibe 50 kann auch als Kragen einstückig an der Distanzbuchse 52 angeformt sein, wodurch sich eine kleinere Teilevielfalt ergibt.

Das Entkopplungselement 42 schmiegt sich großflächig an die Kontur des Platinenrohrs 12 an. Durch die Vorspannung wird der Kontakt zwischen dem Entkopplungselement 42 und dem Platinenrohr 12 zusätzlich verstärkt, so daß die Kräfte auf einer großen Fläche mit einer geringen Flächenpressung gut aufgenommen werden und Schwingungen zusätzlich durch Reibvorgänge zwischen dem Entkopplungselement 42 und dem Platinenrohr 12 wirkungsvoll gedämpft werden. Es ergibt sich somit eine aus wenigen Bauteilen bestehende, funktionssichere Befestigung der Rohrplatine 10, wobei das Entkopplungselement 42 in einfacher Weise vormontiert werden kann und auch in vormontiertem Zustand weitgehend geschützt ist.

### Bezugszeichen

- 10: Rohrplatine
- 12: Platinenrohr
- 14: Rohrstutzen
- 16: Rohrstutzen
- 18: Wischermotor
- 20: Getriebe
- 22: Getriebedom
- 24: Kurbel
- 26: Kurbel
- 28: Kugelzapfen
- 30: Kugelzapfen
- 32: Antriebswelle
- 34: Ende
- 36: Wischerlager
- 38: Verlängerung
- 40: Lagerbuchse
- 42: Entkopplungselement
- 44: Überstand
- 46: Uberdeckung
- 48: Schraubenbolzen
- 50: Scheibe
- 52: Distanzbuchse
- 54: Wandstärke
- 56: Schraubenloch
- 58: Befestigungsbohrung
- 60: Öffnung

## Patentansprüche

1. Befestigung einer Rohrplatine (10) für eine Wischeranlage an einer Fahrzeugkarosserie mit mindestens einer quer zu einem Platinenrohr (12) verlaufenden Befestigungsbohrung (58), in die ein gummielastisches Entkopplungselement (42) mit einem Loch (56) für eine Schraube eingesetzt ist, **dadurch gekennzeichnet, daß** das Entkopplungselement (42) der Innenkontur des Platinenrohrs (12) im Bereich der Befestigungsbohrung (58) angepaßt ist, durch Öffnungen (60) der Befestigungsbohrung (58) mit einem Überstand (44) herausragt und innen die Öffnungen (60) axial zu beiden Seiten überdeckt.

2. Befestigung nach Anspruch 1, **dadurch gekennzeichnet, daß** das Entkopplungselement (42) die Öffnungen (60) in axialer Richtung ungefähr ein bis zwei Millimeter überdeckt.

3. Befestigung nach einem der vorhergehenden Ansprüche, **dadurch gekennzeichnet, daß** das Entkopplungselement (42) eine Wandstärke (54) von mindestens zwei Millimetern aufweist.

4. Befestigung nach einem der vorhergehenden Ansprüche, **dadurch gekennzeichnet, daß** das Entkopplungselement (42) eine Härte von ungefähr dreißig bis sechzig Shore A besitzt.

5. Befestigung nach einem der vorhergehenden Ansprüche, **dadurch gekennzeichnet, daß** das Schraubenloch (56) des Entkopplungselements (42) in Achsrichtung des Platinenrohrs (12) als Langloch ausgebildet ist.

6. Befestigung nach einem der vorhergehenden Ansprüche, **dadurch gekennzeichnet, daß** in das des Entkopplungselement (42) eine Distanzbuchse (52) mit einem Schraubenloch (56) eingesetzt ist.

7. Befestigung nach Anspruch 6, **dadurch gekennzeichnet, daß** die Distanzbuchse (52) an einem Ende einen Bund aufweist, der das Entkopplungselement (42) stirnseitig und die Öffnungen (60) der Befestigungsbohrung (58) überdeckt.

## Claims

1. Fastening of a tube plate (10) for a wiper system on a vehicle body, having at least one fastening bore (58) which runs transversely with respect to a tube element (12) and into which an elastomeric decoupling element (42) having a hole (56) for a screw is inserted, **characterized in that** the decoupling element (42) is matched to the inner contour of the tube element (12) in the region of the fastening bore (58), protrudes with a projecting length (44) through openings (60) in the fastening bore (58) and on the inside covers the openings (60) axially on both sides.

2. Fastening according to Claim 1, **characterized in that** the decoupling element (42) covers the openings (60) in the axial direction by approximately one to two millimetres.

3. Fastening according to one of the preceding claims, **characterized in that** the decoupling element (42) has a wall thickness (54) of at least two millimetres.

4. Fastening according to one of the preceding claims, **characterized in that** the decoupling element (42) has a hardness of approximately thirty to sixty Shore A.

5. Fastening according to one of the preceding claims, **characterized in that** the screw hole (56) of the decoupling element (42) is designed as an elongated hole in the axial direction of the tube element(12).

6. Fastening according to one of the preceding claims, **characterized in that** a spacer bushing (52) having a screw hole (56) is inserted into the decoupling element (42).

7. Fastening according to Claim 6, **characterized in that** the spacer bushing (52) has a collar at one end which covers the decoupling element (42) on the end side and the openings (60) in the fastening bore (58).

## Revendications

1. Fixation d'une platine tubulaire (10) pour une installation d'essuie-glace sur une carrosserie de véhicule, comportant au moins un perçage de fixation (58) qui s'étend transversalement à un tube de plaque (12) et dans laquelle est introduit un élément de découplage (42) en caoutchouc élastique muni d'un trou (56) destiné à une vis,
**caractérisée en ce que**
l'élément de découplage (42) est ajusté au contour intérieur du tube de platine (12) dans la zone du perçage de fixation (58), dépasse par des ouvertures (60) du perçage de fixation (58) selon un porte-à-faux (44) et recouvre axialement des deux côtés les ouvertures (60) à l'intérieur.

2. Fixation selon la revendication 1,
**caractérisée en ce que**
l'élément de découplage (42) recouvre les ouvertures (60) d'environ un à deux millimètres en direction axiale.

3. Fixation selon l'une des revendications précédentes,
**caractérisée en ce que**
l'élément de découplage (42) présente une épaisseur de paroi (54) d'au moins deux millimètres.

4. Fixation selon l'une des revendications précédentes,
**caractérisée en ce que**
l'élément de découplage (42) possède une dureté Shore A d'environ trente à soixante.

5. Fixation selon l'une des revendications précédentes,
**caractérisée en ce que**
le trou de vis (56) de l'élément de découplage (42) est formé en direction de l'axe du tube de platine (12) sous forme d'un trou allongé.

6. Fixation selon l'une des revendications précédentes,
**caractérisée en ce qu'**
une douille d'écartement (52) munie d'un trou de vis (56) est introduite dans l'élément de découplage (42).

7. Fixation selon la revendication 6,
**caractérisée en ce que**
la douille d'écartement (52) présente à l'une des extrémités un épaulement qui recouvre l'élément de découplage (42) du côté frontal et les ouvertures (60) du perçage de fixation (58.)
